# FASCICULE DE BREVET EUROPEEN

(11) **EP 3 161 949 B1**
(45) Date de publication et mention de la délivrance du brevet: **27.04.2022**
(21) Numéro de dépôt: 15735996.9
(22) Date de dépôt: 29.06.2015
(51) Int. Cl.: H02M 3/156, H02M 3/335, H02M 3/337, H02M 3/158, H02M 3/28, H02M 1/00

(54) **CONVERTISSEUR DE TENSION COMPRENANT UN CIRCUIT CONVERTISSEUR A RÉSONNANCE**
SPANNUNGSWANDLER MIT UMRICHTERSCHALTUNG AUF RESONANZBASIS
VOLTAGE CONVERTER COMPRISING A RESONANCE-BASED CONVERTER CIRCUIT

(30) Priorité: 30.06.2014 FR 1456215
(43) Date de publication de la demande: 03.05.2017
(73) Titulaire: Valeo Siemens eAutomotive France SAS, 95800 Cergy (FR)
(72) Inventeur: YANG, Gang, F-92400 Courbevoie (FR); DUBUS, Patrick, F-78720 Saint Forget (FR); SADKI, Hicham, F-95000 Cergy (FR); BENDANI, Larbi, F-60110 Meru (FR)
(74) Mandataire: Novembre, Christophe Adelphe
(86) Numéro de dépôt international: PCT/FR2015/051749
(87) Numéro de publication internationale: WO 2016/001545

(56) Documents cités:
- US-A- 4 860 184
- US-A1- 2011 090 717
- US-A1- 2012 281 441
- US-A1- 2013 336 017
- Marian K. Kazimierczuk: "Chapter 13: Current-mode Control" In: "Pulse-Width Modulated DC-DC Power Converters", 16 septembre 2008 (2008-09-16), John Wiley & Sons, Ltd., U.K., XP055174330, ISBN: 978-0-47-069464-0 pages 511-570, DOI: 10.1002/9780470694640.ch13, le document en entier
- James P. Johnson: "Chapter 11: DC-DC Converters" In: "Handbook of Automotive Power Electronics and Motor Drives", 2005, CRC Press, XP055174704, ISSN: 2155-5192 ISBN: 978-1-42-002815-7 pages 231-254, DOI: 10.1201/9781420028157.pt3, section 11.3

## Description

La présente invention concerne un convertisseur de tension comprenant un circuit convertisseur à résonance, un dispositif de conversion de tension comprenant un entrelacement de convertisseurs selon l'invention, ainsi qu'un procédé de conversion de tension mis en œuvre avec le convertisseur selon l'invention.

On connait les convertisseurs de tension DC/DC (pour « direct current/direct current » en anglais) de type à résonance. Typiquement, un convertisseur à résonance comprend des inductances et/ou des capacités en nombre variable pour utiliser un phénomène de résonance entre ces inductances et ces capacités afin de convertir une première tension en une seconde tension. Une architecture de convertisseur DC/DC à résonance de type "LLC série", c'est-à-dire comprenant deux inductances et une capacité en série, est connue du document EP2299580A2.

Le document US 2013/0336017 A1 décrit un convertisseur élévateur de tension en amont d'un convertisseur résonant. Le convertisseur élévateur de tension est contrôlé pour réguler la tension de sortie du convertisseur résonant, qui est piloté avec une fréquence et un rapport cyclique fixes.

Les convertisseurs à résonance peuvent présenter des commutations à zéro de tension ou ZVS (pour « zero voltage switching » en anglais) ou des commutations à zéro de courant ou ZCS (pour « zero current switching » en anglais) qui permettent de réduire les pertes par commutation lors de la conversion. Ces convertisseurs sont donc particulièrement avantageux dans une application automobile où la ressource en énergie est limitée. Dans un véhicule, on peut utiliser un convertisseur de tension pour adapter des niveaux de tension entre plusieurs réseaux électriques du véhicule ou pour convertir une tension entre une source d'énergie et un consommateur électrique embarqué dans le véhicule.

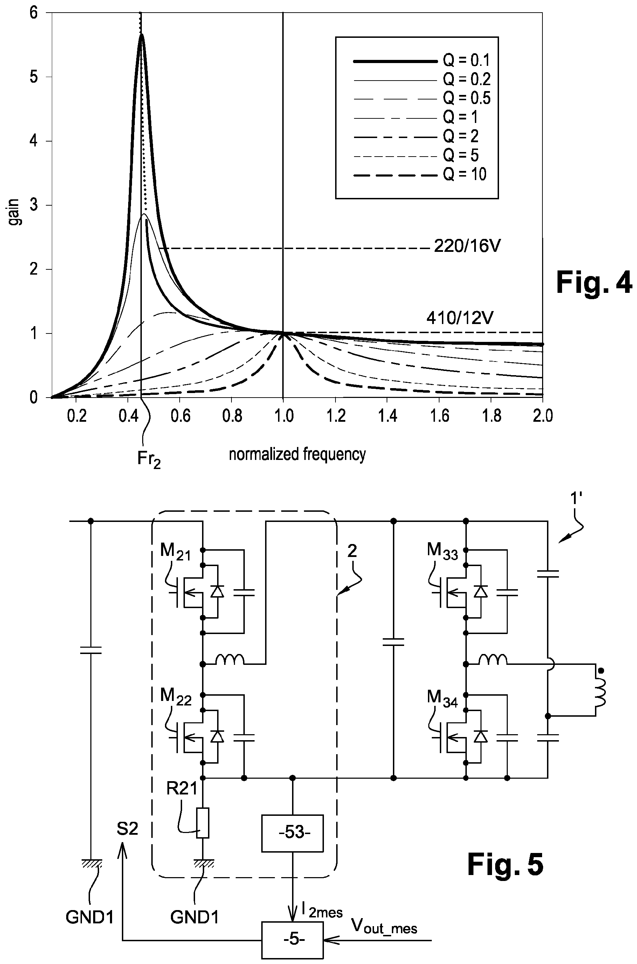

Typiquement, un convertisseur à résonance fonctionne par une succession d'ouvertures et de fermetures dans un circuit d'interrupteurs reliant les inductances et les capacités à une fréquence de découpage de façon à transmettre de l'énergie à travers un transformateur. La figure 4 montre un graphe illustrant le gain en fonction de la fréquence de découpage pour des charges Q différentes en sortie d'un convertisseur à résonance LLC comprenant deux inductances en série avec un condensateur. L'une des inductances peut être une inductance magnétisante du transformateur. La fréquence de découpage est normalisée par rapport à une fréquence de résonance, dite principale ; et la charge est normalisée par rapport à une charge de référence. La fréquence de résonance principale (qui est égale à 1 en valeur normalisée) est liée à la résonance entre une première inductance et la capacité du convertisseur. Le convertisseur a en outre une fréquence de résonance secondaire (désignée par Fᵣ₂ sur le graphe) liée à la résonance entre la première inductance, la capacité et la seconde inductance (qui est généralement l'inductance magnétisante du transformateur). On remarque que les caractéristiques gain-fréquence de découpage varient avec la charge en sortie du convertisseur. Il est avantageux de faire fonctionner le convertisseur à résonance à la fréquence de résonance principale car son gain reste constant quelque soit la charge Q en sortie du convertisseur, et les performances en termes de rendement et de volume du convertisseur sont optimales.

Il est connu de modifier la fréquence de découpage pour atteindre une valeur cible de tension de sortie. En faisant varier la fréquence de découpage on peut se déplacer sur une caractéristique, par exemple celle correspondant à une charge relative de 1. Ainsi, on ajuste le gain du convertisseur pour atteindre la valeur cible de tension de sortie. Le convertisseur est alors conçu pour couvrir toute la gamme de fonctionnement. Dans l'exemple représenté, la tension d'entrée est comprise entre 220 et 410V et la tension de sortie cible est comprise entre 12 et 16V. Le convertisseur est conçu pour pouvoir délivrer une tension de 16V avec une tension d'entrée de 220V et une tension de 12V avec une tension d'entrée de 410V. En particulier, lorsque la tension d'entrée du convertisseur à résonance varie, il est connu de faire varier la fréquence de commutation des interrupteurs du convertisseur à résonance pour réguler sa tension de sortie, c'est-à-dire maintenir sa tension de sortie à une valeur souhaitée.

Cependant, en travaillant avec une fréquence de découpage variable, les avantages liés à la fréquence de résonance principale sont atténués car on s'écarte de la fréquence de résonance principale. Pour conserver un fonctionnement avec un bon rendement, le convertisseur à résonance doit être alimenté par une tension peu variable, par exemple à plus ou moins 20%. Or, dans un véhicule, la tension d'une source d'énergie, telle qu'une batterie, peut varier fortement suivant l'énergie disponible. Ce qui limite l'utilisation du convertisseur à résonance dans un véhicule.

Il est donc recherché une solution pour améliorer les performances d'un convertisseur à résonance de façon à permettre son utilisation dans un véhicule automobile.

Afin de résoudre ce problème, l'invention concerne un convertisseur de tension selon la revendication 1.

Le circuit de régulation est configuré pour délivrer au circuit convertisseur à résonance une valeur de tension d'entrée correspondant à une valeur respective de tension de sortie du circuit convertisseur à résonance.

Grace au circuit de régulation, une valeur souhaitée de tension en sortie du circuit convertisseur à résonance est obtenue en ajustant la tension d'entrée du circuit convertisseur à résonance. A chaque valeur de tension souhaitée en sortie du circuit convertisseur à résonance correspond une valeur de tension d'entrée du circuit convertisseur de résonance. Une valeur de tension de sortie souhaitée est obtenue sans modifier la fréquence de découpage du circuit convertisseur à résonance.

A une tension de sortie donnée du circuit convertisseur à résonance, le circuit de régulation permet un fonctionnement du circuit convertisseur à résonance avec une fréquence constante pour une tension d'entrée quelconque, en particulier comprise dans une gamme de fonctionnement du circuit convertisseur à résonance.

Par exemple, la différence entre la valeur minimale et la valeur maximale de la tension d'entrée du convertisseur est comprise entre 150 et 500 V ; par exemple, la valeur minimale de la tension d'entrée est comprise entre 150 et 200 V ; et la valeur maximale de la tension d'entrée est comprise entre 400 et 500V.

La fréquence de découpage reste donc constante à une incertitude près.

En particulier, le circuit de régulation comprend des interrupteurs dont les rapports cycliques sont ajustés pour obtenir une valeur de tension en sortie du circuit de régulation, c'est-à-dire en entrée du circuit convertisseur à résonance. Cette valeur de tension est ajustée pour obtenir une valeur de tension souhaitée en sortie du circuit convertisseur à résonance.

Le circuit de régulation délivre son signal de sortie en entrée du circuit convertisseur à résonance. A cet effet, le circuit convertisseur à résonance peut être en cascade du circuit de régulation. Le circuit convertisseur à résonance est notamment connecté directement en aval du circuit de régulation, c'est-à-dire que le circuit de régulation est placé directement en amont du circuit convertisseur à résonance.

Notamment, le circuit de régulation est configuré pour délivrer une tension au circuit convertisseur à résonance à partir, directement ou indirectement, d'une tension d'entrée du convertisseur de tension.

Le convertisseur de tension peut être un convertisseur continu-continu configuré pour convertir une tension d'entrée continue en une tension de sortie continue.

Le convertisseur de tension peut être un convertisseur alternatif-continu configuré pour convertir une tension alternative en une tension continue. Avantageusement, le convertisseur de tension comprend alors un circuit convertisseur alternatif-continu en amont du circuit de régulation ou un circuit convertisseur continu-alternatif en aval du circuit convertisseur à résonance. Par des adaptations adéquates, le convertisseur de tension peut être un convertisseur alternatif-alternatif.

Selon un mode de réalisation, le circuit convertisseur à résonance est configuré de sorte que sa fréquence de découpage est égale à une fréquence de résonance du circuit convertisseur à résonance, dite fréquence de résonance principale, à laquelle le gain du circuit convertisseur à résonnance ne varie sensiblement pas avec la charge en sortie du circuit convertisseur à résonance.

Selon un mode de réalisation, le circuit de régulation et le circuit convertisseur à résonance sont dans un seul module. En particulier, le circuit de régulation et le circuit à résonance sont dans un même boitier d'un module électronique ou sur une même carte électronique du module.

Le circuit est destiné à implémenter une boucle de façon à asservir le courant délivré par le circuit de régulation, ou un courant circulant dans le circuit de régulation, à une différence entre la valeur de la tension de sortie du circuit convertisseur à résonnance et une consigne de tension de sortie du circuit convertisseur à résonance.

En particulier, les circuits asservissent le courant en asservissant des interrupteurs compris dans le circuit de régulation, notamment en asservissant des rapports cycliques d'ouverture ou de fermeture des interrupteurs.

Selon un mode de réalisation, le circuit convertisseur à résonance est de type LLC comprenant deux inductances et une capacité, notamment en série.

Selon un mode de réalisation, le circuit convertisseur à résonance comprend :
- un transformateur d'isolation ;
- deux interrupteurs en série ;
- une inductance entre le point milieu des interrupteurs et une première borne d'un primaire du transformateur,
- au moins pour un des deux interrupteurs, une capacité entre une deuxième borne du primaire du transformateur et la borne de l'interrupteur qui n'est pas commune avec l'autre interrupteur. Cette capacité permet une commutation douce dans le circuit convertisseur à résonance.

En particulier, les deux interrupteurs et l'inductance forment une structure en demi-pont. Alternativement, le circuit convertisseur à résonance comprend d'autres interrupteurs permettant une structure en pont complet ou toute autre configuration.

Selon une variante, au moins un des interrupteurs comprend une capacité en parallèle. En particulier, le circuit convertisseur à résonance comprend pour chaque interrupteur, une capacité respective entre la borne de l'interrupteur qui n'est pas commune avec l'autre interrupteur, et la deuxième borne du primaire du transformateur.

L'invention concerne en outre un dispositif de conversion de tension comprenant au moins deux convertisseurs de tension selon l'invention, les deux convertisseurs étant entrelacés et dans lequel les circuits de régulation sont configurés pour fonctionner avec un déphasage de 2π/n, et les circuits convertisseurs à résonnance sont configurés pour fonctionner avec un déphasage de π/n, n étant le nombre de convertisseurs de tension entrelacés.

Selon un mode de réalisation, les convertisseurs de tension partagent le circuit destiné à implémenter la première boucle de sorte que les circuits de régulation reçoivent la même consigne.

L'invention concerne également un procédé de conversion de tension selon la revendication 9.

Selon un mode de réalisation, la fréquence de découpage est égale à une fréquence de résonance du circuit convertisseur à résonance à laquelle le gain du circuit convertisseur à résonnance ne varie sensiblement pas avec la charge en sortie du circuit convertisseur à résonance.

Selon un mode de réalisation, le procédé comprend la fourniture d'une pluralité de convertisseurs de tension entrelacés ; et dans lequel :
- les circuits de régulation fonctionnent avec un déphasage de 2π/n, n étant le nombre de convertisseurs de tension entrelacés ; et
- les circuits convertisseurs à résonance fonctionnent avec un déphasage de π/n.

Selon un mode de réalisation, le contrôle de la tension de sortie des circuits convertisseurs à résonance est réalisé avec la même consigne.

L'invention sera mieux comprise en faisant référence aux dessins, dans lesquels :
- la figure 1 illustre un exemple non revendiqué de convertisseur de tension;
- la figure 2 illustre un exemple de procédé de commande du convertisseur de tension de la figure 1 ;
- la figure 3 illustre un exemple de procédé de commande d'un dispositif de conversion comprenant un entrelacement de convertisseurs tels qu'en figure 1 ;
- la figure 4, déjà décrite, illustre des caractéristiques d'un convertisseur à résonance LLC
- la figure 5, illustre un exemple de convertisseur selon l'invention.

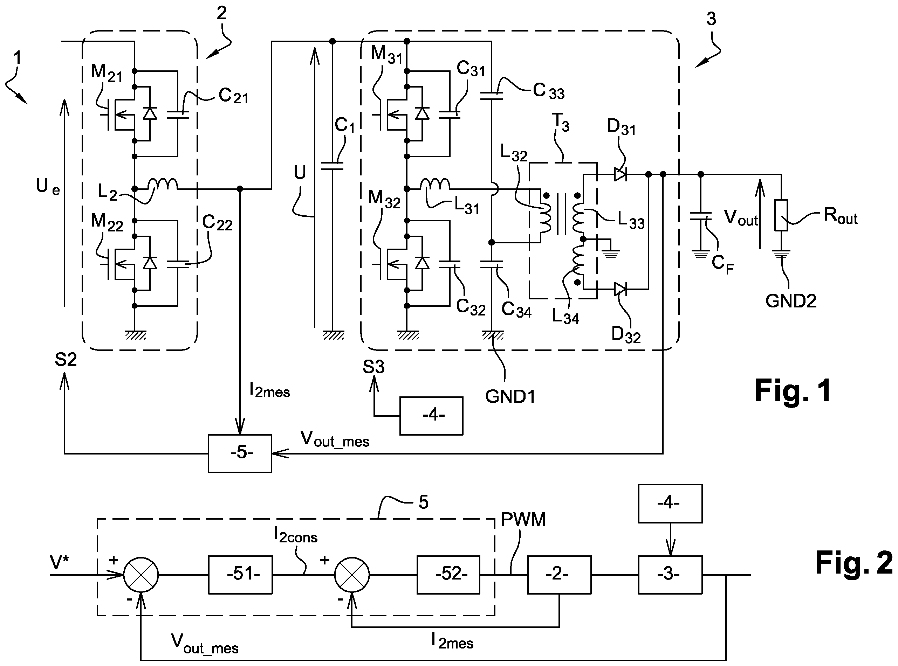

Le convertisseur de tension sera mieux compris en faisant référence à la figure 1.

Le convertisseur 1 comprend un circuit convertisseur à résonance 3 et un circuit 2 de régulation de la tension d'entrée du circuit convertisseur à résonance. Les circuits 2, 3 comprennent des interrupteurs M21, M22, M31, M32 dont une succession d'ouvertures et de fermetures permettent de contrôler le signal de sortie de ces circuits. Ces interrupteurs peuvent être des transistors, tels que des transistors MOSFET, IGBT, ou autres. Les circuits 2, 3 peuvent être réalisés à partir d'un matériau semiconducteur tel que du silicium (Si), du nitrure de gallium (GaN), du carbure de silicium (SiC), ou tout autre matériau semiconduteur.

Dans l'exemple considéré, le circuit de régulation 2 est un convertisseur DC/DC buck, cependant il pourrait être d'un autre type de convertisseur DC/DC. Le circuit de régulation 2 comprend deux interrupteurs M21, M22 en série. L'interrupteur M21, dit interrupteur côté haut, est connecté à la borne haute d'une source de tension (non représentée). L'interrupteur M22, dit interrupteur côté bas, est connecté à la borne basse de la source de tension. Cette borne basse correspond notamment à une première masse GND1 du convertisseur 1. Chaque interrupteur M1 peut comprendre un transistor en parallèle avec une diode de roue libre.

Chaque interrupteur M21, M22 comprend une capacité C21, C22 en parallèle. Ces capacités C21, C22 servent à faire une commutation à zéro de tension ou ZVS (pour « Zero Voltage Switching » en anglais) lors de l'ouverture et/ou de la fermeture des interrupteurs. Pendant l'ouverture d'un interrupteur M21, M22 on récupère l'énergie stockée dans une inductance pour décharger et recharger la capacité C21, C22 qui est aux bornes de l'interrupteur. Une fois que la tension est proche de 0V on vient commander l'interrupteur et ainsi on réalise une commutation sous zéro de tension ce qui réduit fortement les pertes en commutation.

Une inductance L2 a une première borne connectée au point milieu des deux interrupteurs M21, M22, et une deuxième borne connectée à l'entrée du circuit convertisseur à résonance 3.

Une capacité C1 est connectée entre la deuxième borne de l'inductance L2 et la première masse GND1 du convertisseur 1, et permet de faire l'interface entre les circuits 2, 3.

Le circuit convertisseur à résonance 3 comprend deux interrupteurs M31, M32 en série et une inductance L31 connectée au point milieu des deux interrupteurs M31, M32. Les interrupteurs M31, M32 et l'inductance L31 sont dans une même configuration que celle décrite précédemment pour les interrupteurs M21, M22 et l'inductance L2. Les interrupteurs M31, M32 comprennent des diodes et des capacités C31, C32 similaires aux diodes et aux capacités C21, C22 décrites précédemment pour les interrupteurs M21, M22. Un transformateur d'isolation T3 comprend un primaire L32 et deux secondaires L33, L34. La deuxième borne de l'inductance L31 est connectée au primaire L32 du transformateur T3. Les secondaires L33, L34 sont en série avec leur point milieu connecté à une seconde masse GND2 du convertisseur de tension 1. Cependant, le transformateur T3 pourrait avoir une autre configuration dans la mesure où elle permet de réaliser une isolation et une conversion de tension par résonance.

Le circuit convertisseur à résonance 3 réalise une conversion de tension en utilisant une résonance entre l'inductance L31, l'inductance L32 et une capacité. La capacité est réalisée par deux capacités C33, C34. Une capacité C33 est connectée entre la borne de l'interrupteur côté haut M31 qui n'est pas commune avec l'autre interrupteur M32, et la borne du primaire L32 qui n'est pas connectée à l'inductance L31. Cette borne de l'interrupteur M31 correspond à la borne haute de la source de tension. Une autre capacité C34 est connectée entre la borne de l'interrupteur côté bas M32 qui n'est pas commune avec l'autre interrupteur M31, et la borne du primaire L32 qui n'est pas connectée à l'inductance L31. Cette borne de l'interrupteur M32 correspond à la borne basse de la source de tension. La capacité aurait pu être réalisée d'une autre façon, par exemple par une seule capacité en série avec les inductances L31 et L32. En outre, la résonance aurait pu être obtenue en utilisant une inductance parallèle au primaire L32 à la place du primaire L32.

Le circuit convertisseur à résonance 3 comprend également des diodes D31, D32 pour redresser le signal issu du transformateur T3. A cet effet, une diode D31 a son anode connectée à une borne d'un secondaire L33 et l'autre diode D32 a son anode connectée à une borne de l'autre secondaire L34, ces bornes étant différentes du point milieu des deux secondaires L33, L34. Les diodes D31, D32 pourraient être avantageusement remplacées par des interrupteurs, notamment des interrupteurs à effet de champ, tels que des transistors MOSFET, IGBT ou autres, afin d'obtenir par exemple un redressement synchrone en sortie du transformateur T3. Pour des applications à fort courant au secondaire l'usage de MOSFET à la place des diodes permet d'améliorer le rendement global du convertisseur 1.

Le convertisseur de tension 1 comprend une capacité CF pour filtrer le signal délivré par le circuit convertisseur à résonance 3.

Dans l'exemple de la figure 1, les interrupteurs M31, M32 fonctionnent avec une fréquence de découpage qui ne varie pas, c'est-à-dire qui reste constante au cours du temps. La fréquence de découpage est commandée par le signal S3 délivré par une unité de commande 4 du circuit à résonance 3. La fréquence de découpage est de préférence égale à la fréquence de résonance principale du circuit convertisseur à résonance 3. A la fréquence de résonance principale, le circuit convertisseur à résonance 3 présente un gain qui reste constant quelque soit la charge Q en sortie du circuit convertisseur à résonance, et les performances en termes de rendement et de volume du convertisseur sont optimales.

Lors du fonctionnement du convertisseur 1, la tension de sortie Vout du circuit de régulation 3 est contrôlée par la tension délivrée par le circuit de régulation 2, c'est-à-dire en entrée du circuit convertisseur 3. A cet effet, le convertisseur 1 comprend une unité de commande 5 du circuit de régulation 2. L'unité de commande 5 délivre un signal S2 qui commande l'ouverture et la fermeture des interrupteurs M21, M22 pour contrôler le signal électrique délivré par le circuit de régulation 2. Les interrupteurs M21, M22 sont commandés de sorte que la tension délivrée en entrée du circuit convertisseur à résonance 3, c'est-à-dire en sortie du de régulation 2, permette d'obtenir une valeur de tension souhaitée en sortie du circuit convertisseur à résonance 3. Ainsi, contrairement à l'art antérieur, il n'est pas nécessaire de faire varier la fréquence de découpage du circuit convertisseur à résonance 3. Le circuit convertisseur à résonance 3 peut donc fonctionner à sa fréquence la plus avantageuse, notamment à sa fréquence de résonance principale.

En particulier, lorsque la tension d'entrée Ue du convertisseur de tension 1 varie, le circuit de régulation 2 permet de s'assurer que la tension U en entrée du circuit convertisseur à résonance 3 garde une valeur qui permet d'obtenir la tension de sortie Vout désirée. Ainsi, si la tension d'entrée Ue du convertisseur 1 change de valeur, l'unité de commande 5 modifie de façon correspondante la commande des rapports cycliques des interrupteurs M21, M22 pour maintenir la tension U en sortie du circuit de régulation 2, c'est-à-dire en entrée du convertisseur à résonance 3.

Le fonctionnement du convertisseur de la figure 1 sera mieux compris en faisant référence à la figure 2.

L'unité de commande 5 réalise une première boucle d'asservissement du courant délivré par le circuit de régulation 2 à une différence entre la valeur Vout_mes de la tension de sortie du circuit convertisseur à résonnance 2 et une tension Vout souhaitée en sortie du circuit convertisseur à résonance 3. A cet effet, l'unité de commande 5 reçoit la tension Vout_mes mesurée en sortie du circuit convertisseur à résonance 3 et compare une consigne de tension V^{∗} avec la tension Vout_mes mesurée. La consigne de tension V^{∗} correspond à la tension Vout souhaitée en sortie du circuit convertisseur à résonance 3. En fonction du résultat de la comparaison, un contrôleur 51 délivre une consigne de courant I2cons au circuit de régulation 2 de façon à obtenir une tension U attendue en sortie du circuit de régulation 2, c'est-à-dire en entrée du circuit convertisseur à résonance 3. La consigne de courant I2cons est telle que le circuit de régulation 2 délivre au circuit convertisseur à résonance 3 la valeur de tension d'entrée U correspondant à la valeur respective attendue Vout de tension de sortie du circuit convertisseur à résonance.

La première boucle d'asservissement pourrait être réalisée par tout autre moyen. Par exemple, la première boucle pourrait asservir directement la tension délivrée par le circuit de régulation 2.

L'unité de commande 5 peut assurer en outre une protection du circuit de régulation 3. Par exemple, en cas de court-circuit au niveau de la charge de sortie Rout, l'unité de commande 5 peut protéger le circuit convertisseur à résonance 3 en agissant sur les commandes S2 du circuit de régulation 2 de manière à annuler la tension en entrée du circuit convertisseur à résonance 3 afin de le protéger.

L'unité de commande 5 peut réaliser une deuxième boucle qui asservit le courant délivré par le circuit de régulation 2 à une différence entre la valeur I2mes du courant délivré par le circuit de régulation et la consigne de courant I2cons. En particulier, l'unité de commande 5 compare la consigne de courant I2cons issue de la première boucle avec le courant 12mes mesuré en sortie du circuit de régulation 2. En fonction du résultat de cette comparaison, un contrôleur 52 détermine un signal PWM de commande du rapport cyclique des interrupteurs M31, M32 du circuit de régulation 2, de façon à ajuster le courant délivré par le circuit de régulation 2 pour obtenir le courant I2cons attendu ; et ainsi obtenir un signal ayant la tension U attendue en sortie du circuit de régulation 2, c'est-à-dire en entrée du circuit convertisseur à résonance 3. La deuxième boucle d'asservissement pourrait être réalisée par tout autre moyen permettant d'obtenir, en sortie du circuit de régulation 2, la tension U afin d'atteindre la tension Vout en sortie du circuit convertisseur à résonance 3. En particulier, une boucle de tension pourrait être utilisée. Cependant, la boucle de courant est plus facile à mettre en œuvre car, en petit signal, la boucle de courant permet d'avoir une fonction de transfert du premier ordre alors que la boucle de tension est du deuxième ordre. En outre, le convertisseur de tension 1 pourrait mettre en œuvre la première boucle sans utiliser la deuxième boucle.

Pour des applications de puissance, il est avantageux d'entrelacer plusieurs convertisseurs 1. On peut mettre des convertisseurs 1 en parallèle et les entrelacer afin de limiter le courant alternatif de sortie et réduire la valeur de la capacité de filtrage CF en sortie du circuit convertisseur à résonance 3. Dans chaque convertisseur 1, grâce au circuit de régulation 2, la fréquence de découpage du circuit convertisseur à résonance 3 est constante.

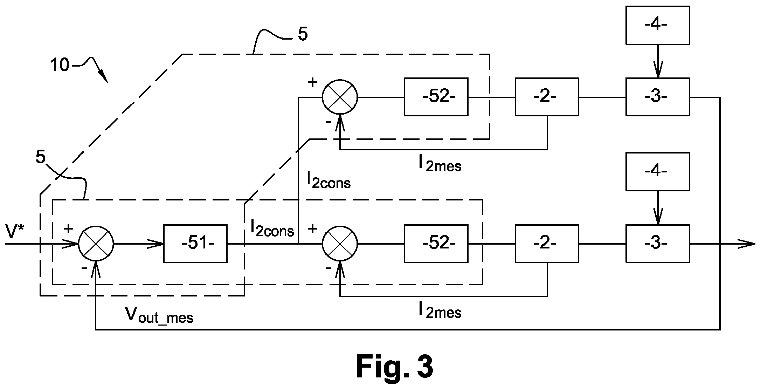

La figure 3 illustre un fonctionnement d'un dispositif de conversion 10 qui comprend un entrelacement de convertisseurs 1 tels que représentés en figure 1. De préférence, la première boucle d'asservissement est commune à tous les convertisseurs 1. Ainsi, les circuits de régulation 2 reçoivent la même consigne de courant I2cons. A cet effet, le dispositif 10 peut comprendre un seul contrôleur 51 délivrant une seule consigne de courant I2cons à tous les circuits de régulation 2. Ainsi, un équilibrage en courant entre les convertisseurs de tension 1 est assuré.

De préférence, les convertisseurs 1 fonctionnent avec un déphasage. En particulier, les circuits de régulation 2 fonctionnent avec un déphasage de 2π/n, où n est le nombre de convertisseurs 1 entrelacés, qui permet de limiter les fluctuations en sortie du dispositif 10et les problèmes de compatibilité électromagnétique. Les circuits convertisseurs à résonance 3 fonctionnent avec un déphasage de π/n qui permet de limiter les ondulations en sortie du dispositif 10.

La figure 5 illustre un exemple de convertisseur 1' selon l'invention. Seules les différences avec le convertisseur 1 illustré en figure 1 seront expliquées ci-après. Le circuit lié au secondaire L33, L34 n'est pas représenté.

Dans cet exemple de convertisseur 1', le circuit de régulation 2 comprend une résistance R21 en pied de pont. Dans l'exemple illustré en figure 1, l'interrupteur côté bas M22 du circuit de régulation 2, la capacité C1 entre le circuit de régulation 2 et le circuit convertisseur à résonance 3, l'interrupteur côté bas M32 du circuit convertisseur à résonance 3 ont une borne connectée à la première masse GND1. Tandis que dans l'exemple illustré en figure 5, la borne de ces composants est commune avec une borne de la résistance R21 en pied de pont. Cette résistance R21 a son autre borne connectée à la première masse GND1.

Dans cet exemple, la première boucle d'asservissement est réalisée avec un courant circulant dans le circuit de régulation 2. En particulier, la première boucle est réalisée avec le courant circulant dans la résistance R21 en pied de pont. Le courant circulant dans la résistance R21 en pied de pont est l'image du courant entrant dans le circuit de régulation 2. En asservissant le courant circulant dans la résistance R21 en pied de pont, on détermine le courant entrant dans le circuit de régulation 2 et ainsi la tension du signal délivré au circuit convertisseur à résonance 3. Le convertisseur 1' peut comprendre un filtre 53 pour filtrer la mesure aux bornes de la résistance R21 en pied de pont. Cet exemple de convertisseur 1' permet de diminuer le bruit dans le contrôle du circuit de régulation 2.

Comme dans l'exemple illustré en figure 1, la deuxième boucle peut aussi être réalisée en utilisant le courant circulant dans la résistance R21 en pied de pont.

## Revendications

1. Convertisseur de tension (1) comprenant :
- un circuit convertisseur à résonance (3) configuré pour présenter au moins une fréquence de découpage ;
- un circuit de régulation (2) de la tension d'entrée du circuit convertisseur à résonance (3), ledit circuit de régulation (2) étant configuré pour contrôler la tension de sortie du circuit convertisseur à résonance (3) en modifiant la tension délivrée au circuit convertisseur à résonance (3), la fréquence de découpage restant constante ;
- un circuit (5) destiné à implémenter :
- une première boucle de façon à asservir une consigne (I2cons) de courant du circuit de régulation (2) à une différence entre la valeur (Vout mes) de la tension de sortie du circuit convertisseur à résonnance (3) et une consigne (V^{∗}) de tension de sortie du circuit convertisseur à résonance (3), la consigne (I2cons) de courant étant telle que le circuit de régulation (2) délivre au circuit convertisseur à résonance (3) une valeur de tension d'entrée correspondant à une valeur respective de tension de sortie du circuit convertisseur à résonance,
- une deuxième boucle de façon à asservir le courant du circuit de régulation (2) à une différence entre la valeur (I2mes) dudit courant et la consigne (I2cons) de courant,
le circuit de régulation (2) comprenant deux interrupteurs (M21, M22) en série, dont un interrupteur côté haut (M21), connecté à une borne haute du convertisseur de tension (1), et un interrupteur côté bas (M22), connecté à une borne basse du convertisseur de tension (1) ; et
le circuit convertisseur à résonance (3) ayant une borne basse commune avec la borne basse du convertisseur de tension (1),
le convertisseur de tension (1) comprenant une inductance (L2) ayant une première borne connectée au point milieu des deux interrupteurs (M21, M22), et une deuxième borne connectée à une borne haute du circuit convertisseur à résonance (3),
et le convertisseur de tension (1) comprenant un filtre (53) et une résistance (R21) connectée d'une part à la borne basse du convertisseur de tension (1) et d'autre part à une masse du convertisseur de tension (1), la première boucle étant implémentée de sorte à asservir le courant circulant dans la résistance (R21) et le filtre (53) étant implémenté de sorte à filtrer la mesure aux bornes de la résistance (R21),
la borne haute du convertisseur de tension (1) et la masse du convertisseur de tension (1) constituant des bornes d'entrée du convertisseur de tension (1).

2. Convertisseur de tension (1) selon la revendication 1, dans lequel le circuit convertisseur à résonance (3) est configuré de sorte que sa fréquence de découpage est égale à une fréquence de résonance du circuit convertisseur à résonance, dite fréquence de résonance principale, à laquelle le gain du circuit convertisseur à résonnance (3) ne varie sensiblement pas avec la charge (Rout) en sortie du circuit convertisseur à résonance (3).

3. Convertisseur (1) selon les revendications 1 ou 2, dans lequel le circuit de régulation (2) et le circuit convertisseur à résonance (3) sont dans un seul module.

4. Convertisseur (1) selon l'une des revendications précédentes, dans lequel le circuit convertisseur à résonance est de type LLC comprenant deux inductances et une capacité.

5. Convertisseur (1) selon l'une des revendications précédentes, dans lequel le circuit convertisseur à résonance (3) comprend :
- un transformateur d'isolation (T3) ;
- deux interrupteurs (M31, M32) en série ;
- une inductance (L31) entre le point milieu des interrupteurs (M31, M32) et une première borne d'un primaire (L32) du transformateur (T3) ;
- au moins pour un des deux interrupteurs (M31, M32), une capacité (C33, C34) entre une deuxième borne du primaire (L31) du transformateur (T3) et la borne de l'interrupteur (M31, M32) qui n'est pas commune avec l'autre interrupteur.

6. Convertisseur (1) selon la revendication précédente, dans lequel au moins un des interrupteurs (M31, M32) comprend une capacité (C31, C32) en parallèle.

7. Dispositif (10) de conversion de tension comprenant au moins deux convertisseurs de tension (1) selon l'une des revendications précédentes, les deux convertisseurs (1) étant entrelacés ; et dans lequel les circuits de régulation (2) sont configurés pour fonctionner avec un déphasage de 2π/n, et les circuits convertisseurs à résonnance (3) sont configurés pour fonctionner avec un déphasage de π/n, n étant le nombre de convertisseurs de tension entrelacés.

8. Dispositif (10) selon la revendication précédente, dans lequel les convertisseurs de tension (1) partagent le circuit (5) destiné à implémenter la première boucle de sorte que les circuits de régulation (2) reçoivent la même consigne (I2cons).

9. Procédé de conversion de tension comprenant les étapes consistant à :
- fournir au moins un convertisseur de tension selon l'une des revendications 1 à 6;
- contrôler la tension de sortie du circuit convertisseur à résonance (3) en modifiant la tension délivrée au convertisseur à résonance (3), la fréquence de découpage restant constante ;
dans lequel le contrôle de la tension de sortie du circuit convertisseur à résonance (3) comprend :
- une première boucle asservissant la consigne (I2cons) de courant du circuit de régulation (2) à une différence entre la valeur (Vout_mes) de la tension de sortie du circuit convertisseur à résonnance (3) et une consigne (V^{∗}) de tension de sortie du circuit convertisseur à résonance (3), la consigne (I2cons) de courant étant telle que le circuit convertisseur à résonance (3) reçoit une tension d'entrée ayant une valeur correspondant à une valeur respective de tension de sortie du circuit convertisseur à résonance,
- une deuxième boucle asservissant le courant du circuit de régulation (2) à une différence entre la valeur (I2mes) dudit courant et la consigne (I2cons) de courant.

10. Procédé selon la revendication 9, dans lequel la fréquence de découpage est égale à une fréquence de résonance du circuit convertisseur à résonance (3) à laquelle le gain du circuit convertisseur à résonnance (3) ne varie sensiblement pas avec la charge (Rout) en sortie du circuit convertisseur à résonance (3).

11. Procédé selon l'une des revendications 9 ou 10, comprenant la fourniture d'une pluralité de convertisseurs de tension (1) entrelacés ; et dans lequel :
- les circuits de régulation (2) fonctionnent avec un déphasage de 2π/n, n étant le nombre de convertisseurs de tension (1) entrelacés ; et
- les circuits convertisseurs à résonance (3) fonctionnent avec un déphasage de π/n.

12. Procédé selon la revendication 11, dans lequel le contrôle de la tension de sortie des circuits convertisseurs à résonance (3) est réalisé avec la même consigne (I2cons).

## Patentansprüche

1. Spannungswandler (1), der enthält:
- eine Resonanzwandlerschaltung (3), die konfiguriert ist, mindestens eine Taktfrequenz aufzuweisen;
- einen Regelkreis (2) der Eingangsspannung der Resonanzwandlerschaltung (3), wobei der Regelkreis (2) konfiguriert ist, die Ausgangsspannung der Resonanzwandlerschaltung (3) durch Ändern der an die Resonanzwandlerschaltung (3) gelieferten Spannung zu steuern, wobei die Taktfrequenz konstant bleibt;
- eine Schaltung (5), die dazu bestimmt ist, zu implementieren:
- eine erste Schleife, um einen Stromsollwert (I2cons) des Regelkreises (2) auf eine Differenz zwischen dem Wert (Vout mes) der Ausgangsspannung der Resonanzwandlerschaltung (3) und einem Ausgangsspannungssollwert (V*) der Resonanzwandlerschaltung (3) zu regeln, wobei der Stromsollwert (I2cons) so ist, dass der Regelkreis (2) der Resonanzwandlerschaltung (3) einen Eingangsspannungswert entsprechend einem jeweiligen Ausgangsspannungswert der Resonanzwandlerschaltung liefert,
- eine zweite Schleife, um den Strom des Regelkreises (2) auf eine Differenz zwischen dem Wert (I2mes) des Stroms und dem Stromsollwert (I2cons) zu regeln,
wobei der Regelkreis (2) zwei Schalter (M21, M22) in Reihe enthält, einen Schalter auf der oberen Seite (M21), der mit einem oberen Anschluss des Spannungswandlers (1) verbunden ist, und einen Schalter auf der unteren Seite (M22), der mit einem unteren Anschluss des Spannungswandlers (1) verbunden ist; und
die Resonanzwandlerschaltung (3) einen unteren Anschluss gemeinsam mit dem unteren Anschluss des Spannungswandlers (1) hat,
wobei der Spannungswandler (1) eine Induktivität (L2) enthält, die einen ersten Anschluss mit dem Mittelpunkt der zwei Schalter (M21, M22) verbunden und einen zweiten Anschluss mit einem oberen Anschluss der Resonanzwandlerschaltung (3) verbunden hat,
und der Spannungswandler (1) einen Filter (53) und einen Widerstand (R21) enthält, der einerseits mit dem unteren Anschluss des Spannungswandlers (1) und andererseits mit einer Masse des Spannungswandlers (1) verbunden ist, wobei die erste Schleife so implementiert wird, dass der im Widerstand (R21) fließende Strom geregelt wird, und der Filter (53) so implementiert wird, dass er die Messung an den Anschlüssen des Widerstands (R21) filtert, wobei der obere Anschluss des Spannungswandlers (1) und die Masse des Spannungswandlers (1) Eingangsanschlüsse des Spannungswandlers (1) bilden.

2. Spannungswandler (1) nach Anspruch 1, wobei die Resonanzwandlerschaltung (3) so konfiguriert ist, dass ihre Taktfrequenz gleich einer Resonanzfrequenz der Resonanzwandlerschaltung ist, Hauptresonanzfrequenz genannt, bei der die Verstärkung der Resonanzwandlerschaltung (3) im Wesentlichen nicht mit der Last (Rout) am Ausgang der Resonanzwandlerschaltung (3) variiert.

3. Wandler (1) nach den Ansprüchen 1 oder 2, wobei der Regelkreis (2) und die Resonanzwandlerschaltung (3) sich in einem einzigen Modul befinden.

4. Wandler (1) nach einem der vorhergehenden Ansprüche, wobei die Resonanzwandlerschaltung vom Typ LLC ist, der zwei Induktivitäten und eine Kapazität enthält.

5. Wandler (1) nach einem der vorhergehenden Ansprüche, wobei die Resonanzwandlerschaltung (3) enthält:
- einen Isolationstransformator (T3);
- zwei Schalter (M31, M32) in Reihe;
- eine Induktivität (L31) zwischen dem Mittelpunkt der Schalter (M31, M32) und einem ersten Anschluss einer Primärwicklung (L32) des Transformators (T3);
- mindestens für einen der zwei Schalter (M31, M32) eine Kapazität (C33, C34) zwischen einem zweiten Anschluss der Primärwicklung (L31) des Transformators (T3) und dem Anschluss des Schalters (M31, M32), der nicht mit dem anderen Schalter gemeinsam ist.

6. Wandler (1) nach nach dem vorhergehenden Anspruch, wobei mindestens einer der Schalter (M31, M32) eine parallelgeschaltete Kapazität (C31, C32) enthält.

7. Spannungswandlervorrichtung (10), die mindestens zwei Spannungswandler (1) nach einem der vorhergehenden Ansprüche enthält, wobei die zwei Wandler (1) verschachtelt sind; und wobei die Regelkreise (2) konfiguriert sind, mit einer Phasenverschiebung von 2π/n zu arbeiten, und die Resonanzwandlerschaltungen (3) konfiguriert sind, mit einer Phasenverschiebung von π/n zu arbeiten, wobei n die Anzahl von verschachtelten Spannungswandlern ist.

8. Vorrichtung (10) nach nach dem vorhergehenden Anspruch, wobei die Spannungswandler (1) sich die Schaltung (5) teilen, die dazu bestimmt ist, die erste Schleife zu implementieren, so dass die Regelkreise (2) den gleichen Sollwert (I2cons) empfangen.

9. Spannungsumwandlungsverfahren, das die Schritte enthält, die darin bestehen:
- Bereitstellen mindestens eines Spannungswandlers nach einem der Ansprüche 1 bis 6;
- Steuern der Ausgangsspannung der Resonanzwandlerschaltung (3) durch Ändern der an den Resonanzwandler (3) gelieferten Spannung, wobei die Taktfrequenz konstant bleibt;
wobei die Steuerung der Ausgangsspannung der Resonanzwandlerschaltung (3) enthält:
- eine erste Schleife, die den Stromsollwert (I2cons) des Regelkreises (2) auf eine Differenz zwischen dem Wert (Vout mes) der Ausgangsspannung der Resonanzwandlerschaltung (3) und einem Ausgangsspannungswert (V*) der Resonanzwandlerschaltung (3) regelt, wobei der Stromsollwert (I2cons) so ist, dass die Resonanzwandlerschaltung (3) eine Eingangsspannung empfängt, die einen Wert entsprechend einem jeweiligen Ausgangsspannungswert der Resonanzwandlerschaltung hat,
- eine zweite Schleife, die den Strom des Regelkreises (2) auf eine Differenz zwischen dem Wert (I2mes) des Stroms und dem Stromsollwert (I2cons) regelt.

10. Verfahren nach Anspruch 9, wobei die Taktfrequenz gleich einer Resonanzfrequenz der Resonanzwandlerschaltung (3) ist, bei der die Verstärkung der Resonanzwandlerschaltung (3) im Wesentlichen nicht mit der Last (Rout) am Ausgang der Resonanzwandlerschaltung (3) variiert.

11. Verfahren nach einem der Ansprüche 9 oder 10, das die Bereitstellung einer Vielzahl von verschachtelten Spannungswandlern (1) enthält; und wobei:
- die Regelkreise (2) mit einer Phasenverschiebung von 2π/n arbeiten, wobei n die Anzahl von verschachtelten Spannungswandlern (1) ist; und
- die Resonanzwandlerschaltungen (3) mit einer Phasenverschiebung von π/n arbeiten.

12. Verfahren nach Anspruch 11, wobei die Steuerung der Ausgangsspannung der Resonanzwandlerschaltungen (3) mit dem gleichen Sollwert (I2cons) durchgeführt wird.

## Claims

1. Voltage converter (1) comprising:
- a resonant converter circuit (3) configured to exhibit at least one chopping frequency;
- a regulation circuit (2) for regulating the input voltage of the resonant converter circuit (3), said regulation circuit (2) being configured to control the output voltage of the resonant converter circuit (3) by modifying the voltage delivered to the resonant converter circuit (3), the chopping frequency remaining constant; and
- a circuit (5) intended to implement:
- a first loop so as to servocontrol a current setpoint (I2cons) of the regulation circuit (2) to a difference between the value (Vout_mes) of the output voltage of the resonant converter circuit (3) and an output voltage setpoint (V*) of the resonant converter circuit (3), the current setpoint (I2cons) being such that the regulation circuit (2) delivers, to the resonant converter circuit (3), an input voltage value corresponding to a respective output voltage value of the resonant converter circuit, and
- a second loop so as to servocontrol the current of the regulation circuit (2) to a difference between the value (I2mes) of said current and the current setpoint (I2cons), the regulation circuit (2) comprising two switches (M21, M22) in series, namely a high-side switch (M21), connected to a high-side terminal of the voltage converter (1), and a low-side switch (M22), connected to a low-side terminal of the voltage converter (1); and
the resonant converter circuit (3) having a low-side terminal shared with the low-side terminal of the voltage converter (1),
the voltage converter (1) comprising an inductor (L2) having a first terminal connected to the midpoint of the two switches (M21, M22), and a second terminal connected to a high-side terminal of the resonant converter circuit (3),
and the voltage converter (1) comprising a filter (53) and a resistor (R21) connected on the one hand to the low-side terminal of the voltage converter (1) and on the other hand to a ground of the voltage converter (1), the first loop being implemented so as to servocontrol the current flowing through the resistor (R21) and the filter (53) being implemented so as to filter the measurement across the terminals of the resistor (R21),
the high-side terminal of the voltage converter (1) and the ground of the voltage converter (1) forming input terminals of the voltage converter (1).

2. Voltage converter (1) according to Claim 1, wherein the resonant converter circuit (3) is configured such that its chopping frequency is equal to a resonant frequency of the resonant converter circuit, referred to as the main resonant frequency, at which the gain of the resonant converter circuit (3) does not vary substantially with the load (Rout) on the output of the resonant converter circuit (3).

3. Converter (1) according to Claim 1 or 2, wherein the regulation circuit (2) and the resonant converter circuit (3) are in a single module.

4. Converter (1) according to one of the preceding claims, wherein the resonant converter circuit is of LLC type comprising two inductors and a capacitor.

5. Converter (1) according to one of the preceding claims, wherein the resonant converter circuit (3) comprises:
- an isolation transformer (T3);
- two switches (M31, M32) in series;
- an inductor (L31) between the midpoint of the switches (M31, M32) and a first terminal of a primary (L32) of the transformer (T3); and
- at least for one of the two switches (M31, M32), a capacitor (C33, C34) between a second terminal of the primary (L31) of the transformer (T3) and the terminal of the switch (M31, M32) which is not shared with the other switch.

6. Converter (1) according to the preceding claim, wherein at least one of the switches (M31, M32) comprises a capacitor (C31, C32) in parallel.

7. Voltage conversion device (10) comprising at least two voltage converters (1) according to one of the preceding claims, the two converters (1) being interleaved; and wherein the regulation circuits (2) are configured to operate with a phase difference of 2n/n, and the resonant converter circuits (3) are configured to operate with a phase difference of n/n, n being the number of interleaved voltage converters.

8. Device (10) according to the preceding claim, wherein the voltage converters (1) share the circuit (5) intended to implement the first loop such that the regulation circuits (2) receive the same setpoint (I2cons).

9. Volage conversion method comprising the steps consisting in:
- providing at least one voltage converter according to one of Claims 1 to 6; and
- controlling the output voltage of the resonant converter circuit (3) by modifying the voltage delivered to the resonant converter (3), the chopping frequency remaining constant;
wherein the control of the output voltage of the resonant converter circuit (3) comprises:
- a first loop servocontrolling the current setpoint (I2cons) of the regulation circuit (2) to a difference between the value (Vout_mes) of the output voltage of the resonant converter circuit (3) and an output voltage setpoint (V*) of the resonant converter circuit (3), the current setpoint (I2cons) being such that the resonant converter circuit (3) receives an input voltage having a value corresponding to a respective output voltage value of the resonant converter circuit, and
- a second loop servocontrolling the current of the regulation circuit (2) to a difference between the value (I2mes) of said current and the current setpoint (I2cons).

10. Method according to Claim 9, wherein the chopping frequency is equal to a resonant frequency of the resonant converter circuit (3) at which the gain of the resonant converter circuit (3) does not vary substantially with the load (Rout) on the output of the resonant converter circuit (3).

11. Method according to either Claim 9 or 10, comprising providing a plurality of interleaved voltage converters (1); and wherein:
- the regulation circuits (2) operate with a phase difference of 2n/n, n being the number of interleaved voltage converters (1); and
- the resonant converter circuits (3) operate with a phase difference of n/n.

12. Method according to Claim 11, wherein the control of the output voltage of the resonant converter circuits (3) is performed with the same setpoint (I2cons).
